# EUROPÄISCHE PATENTSCHRIFT

(11) **EP 0 639 758 B1**
(45) Veröffentlichungstag und Bekanntmachung des Hinweises auf die Patenterteilung: **09.07.1997**
(21) Anmeldenummer: 94112285.5
(22) Anmeldetag: 05.08.1994
(51) Int. Cl.: G01G 21/23

(54) **Transportable Plattformwaage mit niedriger Bauhöhe**
Low-profile transportable platform balance
Plateforme de pesage extra-plate transportable

(30) Priorität: 18.08.1993 DE 9312376 U
(43) Veröffentlichungstag der Anmeldung: 22.02.1995
(73) Patentinhaber: SIEMENS AKTIENGESELLSCHAFT, 80333 München (DE)
(72) Erfinder: Haagen, Rüdiger, D-90542 Eckental/Brand (DE); Winkler, Fritz, Dipl.-Ing., D-91058 Erlangen (DE)

(56) Entgegenhaltungen:
- EP-A- 0 327 517
- EP-A- 0 360 923

## Beschreibung

Die Erfindung betrifft eine Plattformwaage.

Plattformwaagen verfügen meist über eine großflächige Abdeckplatte zur Lastaufnahme. Gegenüber den Abmessungen der Abdeckplatte in x- und y-Richtung sollen Plattformwaagen aber eine möglichst niedrige Bauhöhe aufweisen, damit diese bündig und stufenfrei z.B. in Böden eingelassen werden können. Ferner kann hierdurch die Tiefe einer zur Aufnahme einer Plattformwaage notwendigen Grube gering gehalten werden, so daß bauseitig möglichst nur einfach und kostengünstig ausführbare Arbeiten im Bodenbereich notwendig werden.

Einer starken Verringerung der Bauhöhe einer Plattformwaage wurde aber bislang durch konstruktiv bedingte Maßnahmen begrenzt, welche im Inneren der sogenannten Lastecken der Waage zur Sicherstellung einer gewünschten Funktionalität notwendig sind. Die Lastecken, siehe z.B. die Patentschrift EP-A-0 360 923, enthalten als wesentliches Bauelement mindestens eine Wagezelle, und stützen die als Lastaufnehmer dienende Abdeckplatte bevorzugt an allen vier Ecken ab. An diese Lastecken werden neben der eigentlichen Funktion, in einem vorgesehenen Lastbereich liegende Gewichte aufzunehmen, eine Vielzahl weiterer Anforderungen gestellt. So müssen diese in der Regel Vorrichtungen zur Pendelbegrenzung, Abhebesicherung und Zentrierung der Abdeckplatte enthalten.

Die Pendelbegrenzung hat die Aufgabe, einen maximal zulässigen, horizontalen Pendelweg der Abdeckplatte beim Auftreten von quer einwirkenden Schubkräften vorzugeben. Hierdurch wird eine Zerstörung der Wägezellen im Inneren der Lastecken durch eine unzulässig hohe, horizontale Kräfte verhindert.

Die Abhebesicherung der Abdeckplatte hat die Aufgabe, z.B. bei einem Transport der Plattformwaage ein Abreißen des Unterbaues der Waage von der Abdeckplatte im Bereich der Lastecken, und damit insbesondere eine unzulässig hohe vertikale Dehnung der Elemente in den Wägezellen zu verhindern.

Die Mittel zur Zentrierung sollen schließlich z.B. nach dem Einsetzen einer Plattformwaage in ein Grube eine querkraft- und somit verspannungsfreie Ausrichtung der Kopfplatten in x- und y-Richtung möglichst unmittelbar zentrisch über den Wägezellen in den auf dem Boden aufliegenden Lastecken herbeiführen. Diese Maßnahme dient sowohl zur Verbesserung der Meßgenauigkeit als auch zum langfristigen Schutz der Wägezellen gegen mechanische Beschädigung.

Bei handelsüblichen Plattformwaagen sind die oben beschriebenen Mittel zur Pendelbegrenzung, Abhebesicherung und Zentrierung in vielen Fällen in Form von Federn, einstellbaren Anschlägen, Ausrichtschrauben, höhenverstellbaren Ausgleichsfüßen und dergleichen praktisch realisiert. Die hierzu erforderlichen Bauteile sind wiederum in vielen Fällen säulenartig übereinander angeordnet, so daß die zur Aufnahme derart ausgeführter Plattformwaagen notwendigen Gruben eine Tiefe im Bereich von etwa 10 bis 15 cm aufweisen müssen. Bei Estrichhöhen von üblicherweise 6 bis 8 cm tritt dabei aber das Problem auf, daß die Plattformwaage nicht durch einfaches Weglassen bzw. Ausschneiden des Estriches unmittelbar auf das darunter befindliche Betonfundament aufgesetzt werden kann. Vielmehr sind zur ausreichenden Grubenvertiefung aufwendige Betonstemmarbeiten notwendig.

Aus der EP-A-0 327 517 ist zudem eine aus Kopfplatte, Bodemplatte und dazwischen gelegener Wägezelle bestehende Lastecke bekannt. Kopf- und Bodemplatte sind durch Schrauben mit zwischenliegenden Scheiben verbunden und dadurch beschränkt seitlich bewegbar gegenüber einander zwischen Wägezelle und Platten angeordnete Elemente mit zylindrischen Kontaktflächen fangen diese Bewegungen auf.

Demgegenüber liegt der Erfindung die Aufgabe zugrunde, eine Plattformwaage anzugeben, welche trotz des Vorhandenseins von Mitteln zur Pendelbegrenzung, Abhebesicherung und Zentrierung eine so geringe Bauhöhe aufweist, daß diese problemlos transportabel und auf einfache Weise z.B. in Estrichausschnitte einlegbar ist.

Die Aufgabe wird gelöst mit der im Anspruch 1 angegebenen Vorrichtung. Vorteilhafte weitere Ausführungsformen der Erfindung sind in den Unteransprüchen angegeben.

Die Erfindung wird an Hand der in den nachfolgend kurz angeführten Figuren enthaltenen Ausführungsbeispiele näher erläutert. Dabei zeigt
- Fig.1:: eine vorteilhafte Ausführungsform für eine Lastecke der erfindungsgemäßen Plattformwaage in Schnittdarstellung,
- Fig.2:: eine Draufsicht auf die Kopfplatte der Lastecke von Figur 1,
- Fig.3:: eine Draufsicht auf einen Ausschnitt einer vorteilhaften Ausführungsform der erfindungsgemäßen Plattformwaage, welche eine zweite Variante für eine Lastecke aufweist, und
- Fig.4:: einen Querschnitt parallel zum Randbereich der Plattformwaage von Fig.3.

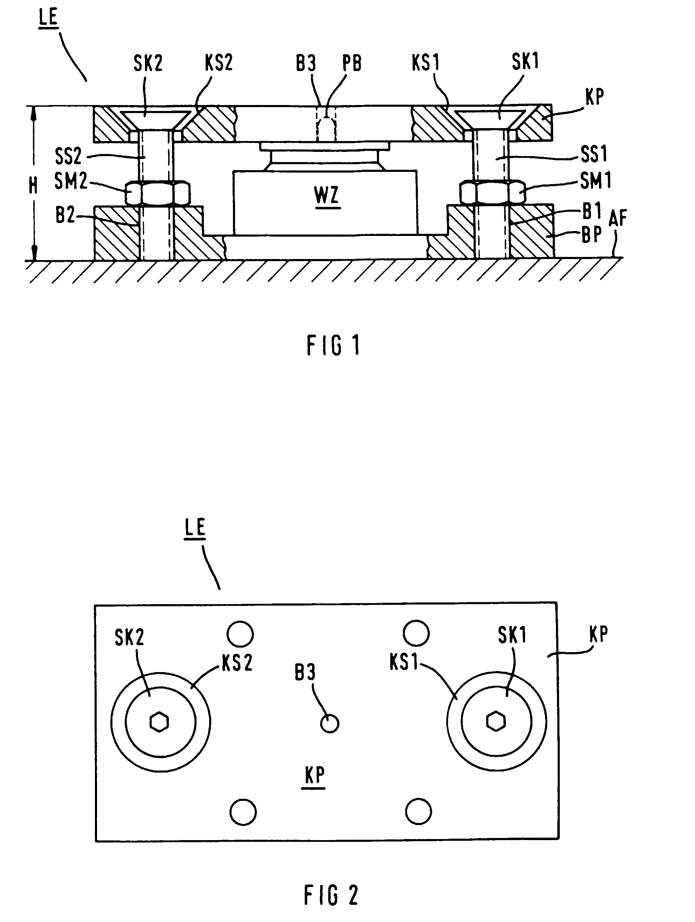

Die in FIG 1 dargestellte Ausführungsform einer Lastecke LE für die erfindungsgemäße Plattformwaage weist eine auf einer Aufstellfläche AF aufliegende Bodenplatte BP und eine gegenüberliegende, bevorzugt gleich große Kopfplatte KP auf. Bevorzugt im Zentrum zwischen beiden Platten ist die eigentliche Wägezelle WZ angeordnet. Diese liegt aus Gründen der Überlastsicherung nahezu auf der darunter befindlichen Bodenplatte BP großflächig auf. Zur Lastaufnahme ruht auf der Oberseite der Wägezelle WZ die Kopfplatte KP, in die in der Regel zusätzlich ein sogenannter Pendelbolzen PB der Wägezelle über eine separate Bohrung B3 eingreift. Mit Hilfe des Pendelbolzens PB der Wägezelle WZ wird die Kopfplatte KP zentrisch ausgerichtet. Aufgrund der geringen Rückstellkraft des Pendelbolzens PB können allerdings keine starken Fehlpositionierungen der Kopfplatte KP und einer darauf ruhenden, in FIG 1 nicht dargestellten Abdeckplatte der Plattformwaage in x- und y-Richtung ausgeglichen werden.

Erfindungsgemäß weist die Lastecke LE der Plattformwaage mindestens einen Bolzen mit Senkkopf auf. Dieser ist vertikal angeordnet und mit der Bodenplatte verbunden. Dessen Senkkopf greift in eine Kegelsenkung auf der außenliegenden Seite der Kopfplatte ein, wobei über einen Luftspalt zwischen den Oberflächen der Kegelsenkung und dem Senkkopf ein Kraftschluß zwischen Abdeckplatte und Wägezelle vermieden wird.

Diese Ausführung hat den besonderen Vorteil, daß der vertikale Bolzen mit Senkkopf zugleich die Funktionen einer Pendelbegrenzung, Abhebesicherung und Selbstzentrierung der Kopfplatte der Lastecke und somit einer darauf ruhenden Abdeckplatte der Plattformwaage übernimmt. Alle drei Funktionen werden somit mit Hilfe eines einzigen und konstruktiv einfach gestalteten Bauelementes bereitgestellt. Da der Senkkopf des Bolzens in der Kegelsenkung im Inneren der Kopfplatte liegt, kann die Bauhöhe einer Lastecke der erfindungsgemäßen Plattformwaage, d.h. der Abstand der außenliegenden Seiten von Kopf- und Bodenplatte, außerordentlich klein gehalten werden. Diese wird somit ausschließlich von der Höhe der zwischen Boden- und Kopfplatte angeordneten Wägezelle bestimmt.

FIG 1 zeigt eine vorteilhafte Ausführungsform für eine Lastecke der erfindungsgemäßen Plattformwaage in Schnittdarstellung, bei der zwei annähernd symmetrisch neben der Wägezelle angeordnete Senkschrauben SS1,SS2 die Funktion des mindestens einen, gleichzeitig zur Pendelbegrenzung, Abhebesicherung und Selbstzentrierung dienenden Bolzens mit Senkkopf übernehmen. Bevorzugt sind die Senkschrauben über Gewindebohrungen B1,B2 in der Bodenplatte BP gelagert und mittels Gewindemuttern SM1,SM2 gesichert. Die Senkschrauben in FIG 1 bzw. entsprechende Bolzen mit Senkkopf können bei Vorliegen einer entsprechend starken Bodenplatte BP auch durch Verschweißung mit dieser verbunden sein.

Wie an Hand der Schnittdarstellung von FIG 1 und der Draufsicht auf die Kopfplatte KP gemäß FIG 2 zu entnehmen ist, sind die Senkköpfe SK1,SK2 der als vertikal angeordnete Bolzen dienenden Senkschrauben SS1,SS2 in entsprechend großen Kegelsenkungen KS1,KS2 im Inneren der Kopfplatte gelagert. Die Begrenzung des horizontalen Pendelweges der Kopfplatte kann auf einfache Weise durch Einstellung des kegelförmigen Luftspaltes zwischen dem Senkkopf und der Oberläche der umgebenden Kegelsenkung erreicht werden.

Beim Transport einer derartigen Plattformwaage z.B. durch Anheben über deren Abdeckplatte, stützen sich die Senkköpfe SK1,SK2 der Senkschrauben auf den Oberflächen der Kegelsenkungen KS1,KS2 ab. Hierdurch wird nicht nur eine Abhebesicherung bewirkt, d.h. eine Verbindung aller Teile der Lastecken. Vielmehr wird auch für die Dauer des Transportes und des abschließenden Absetzens der Pendelwaage am neuen Zielort eine Selbstzentrierung von Kopf- zu Fußplatte bewirkt. Es können somit während des Transportes keine unzulässig hohen, die Wägezelle WZ möglicherweise beschädigenden Pendelungen in x- und y-Richtung auftreten, so daß seperate Transportsicherungen entfallen können. Ferner ist auch nach dem Absetzen der Plattformwaage eine Ausrichtung der Kopfplatten der Lastecken und damit der gesamten Abdeckplatte der Plattformwaage nicht mehr notwendig. Spezielle Justiermittel in x- und y-Richtung können somit auch entfallen.

Die erfindungsgemäße Vorrichtung hat aufgrund der besonders vorteilhaften Verwendung von mindestens einem Bolzen mit Senkkopf zur Pendelbegrenzung, Aushebesicherung und Selbstzentrierung den besonderen Vorteil, daß bis auf die Wägezelle WZ keine Bauteile in den Aufnahmeraum zwischen Boden- und Kopfplatte eingesetzt werden müssen. Es ist somit möglich, sehr niedrige Werte für die Bauhöhe H der Lastecken LE zu erreichen. Die absolute Höhe der kompletten Plattformwaage ist demgegenüber nur um die Dicke der auf den Kopfplatten KP der Lastecken LE ruhenden Abdeckplatte vergrößert.

Praktische Ausführungen einer Lastecke gemäß der Erfindung weisen z.B. für einen Wägebereich von 60 bis 280 kg eine Bauhöhe H von nur ca. 5,2 cm, und für einen Wägebereich von 0,6 bis 2,8 t eine Bauhöhe H von nur 7,6 cm auf. Plattformwaagen mit derartigen Bauhöhen können ohne zusätzlichen Aufwand auf einfache Weise in Estrichausschnitte eingelegt werden, da ihre Bauhöhe in jedem Fall kleiner als die üblichen Estrichtiefen ist. Aufwendige und großflächige Betonstemmarbeiten zur Vertiefung derartiger Aufnahmegruben für die Plattformwaage können somit entfallen.

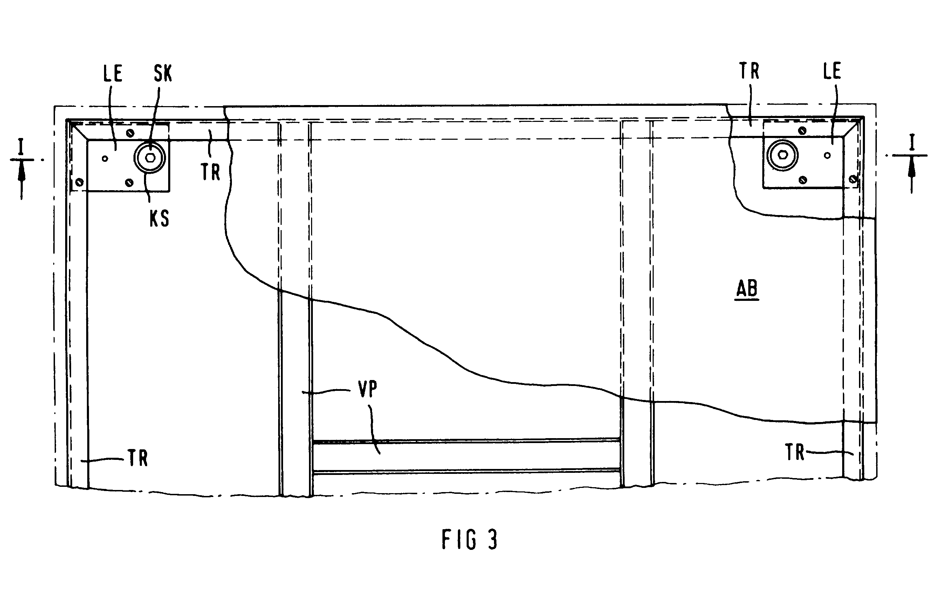

In FIG 3 ist schließlich eine Draufsicht auf einen Ausschnitt einer vorteilhaften Ausführungsform für eine erfindungsgemäße Plattformwaage dargestellt. Die als Lastaufnehmer zum Abstellen auszuwiegender Gegenstände dienende Abdeckplatte AP ist über Lastecken LE abgestützt. Die Ausschnittsdarstellung von FIG 3 zeigt die an einer Längsseite befindlichen Lastecken LE. Zur Versteifung sind auf der Unterseite der Abdeckplatte AP vorteilhaft ein umlaufender Tragrahmen TR und steifungsprofile VP angebracht.

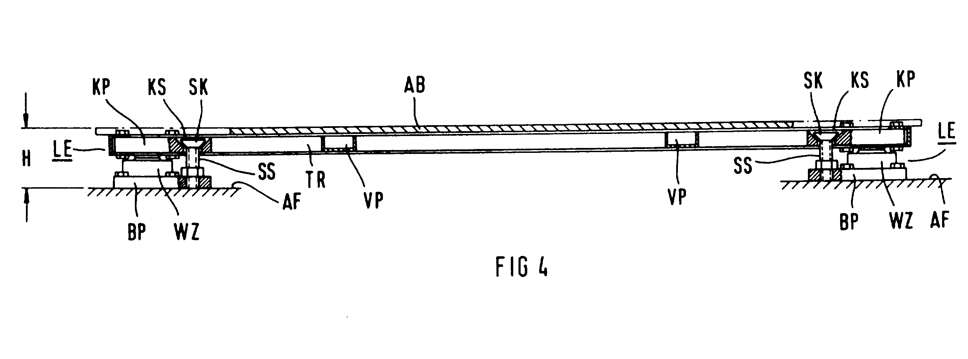

FIG 4 zeigt abschließend eine Querschnittsdarstellung entlang der in FIG 3 mit I bezeichneten Schnittlinie parallel zum Randbereich der Plattformwaage. Die beiden Lastecken LE weisen dabei beispielhaft jeweils eine einzige, gemäß der Erfindung gleichzeitig zur Pendelbegrenzung, Abhebesicherung und Selbstzentrierung dienende Senkschraube SS auf, deren Senkkopf SK in eine entsprechende Kegelsenkung KS der dazugehörigen Kopfplatte KP eingelegt ist. Bei jeder Lastecke LE im Beispiel der FIG 3,4 sind somit eine Wägezelle WZ und eine Senkkopfschraube SS nebeneinander liegend angeordnet. Auch der Darstellung von FIG 4 ist die mit Hilfe der Erfindung erzielbare, außerordentlich niedrige Bauhöhe H der Plattformwaage entnehmbar.

## Patentansprüche

1. Plattformwaage, mit
a) einer Abdeckplatte (AB) zum Abstellen auszuwiegender Gegenstände,
b) Lastecken (LE) zur Abstützung der Abdeckplatte (AB) an den Ecken, welche jeweils aufweisen
b1) eine Bodenplatte (BP)
b2) mindestens einen Bolzen (SS1,SS2;SS) mit Senkkopf (SK1,SK2;SK), welcher vertikal angeordnet mit der Bodenplatte (BP) verbunden ist,
b3) eine Kopfplatte (KP) mit einer Kegelsenkung (KS1, KS2;S) zur Aufnahme des Senkkopfes (SK1,SK2,SK) des mindestens einen Bolzens (SS1,SS2;SS), und
b4) eine Wägezelle (WZ), die zwischen Boden- und Kopfplatte (BP,KP), bevorzugt im Zentrum, angeordnet ist.

2. Plattformwaage nach Anspruch 1, wobei der mindestens eine Bolzen als eine Senkschraube (SS1,SS2;SS) ausgeführt ist, die bevorzugt mittels einer Gewindebohrung (B1,B2) mit der Bodenplatte (BP) verbunden ist.

## Claims

1. A platform weighing machine, comprising
a) a platform (AB) for the deposition of objects to be weighed,
b) load corners (LE) for supporting the platform (AB) at the corners, which load corners (LE) each comprise
b1) a base plate (BP)
b2) at least one bolt (SS1, SS2; SS) with countersunk head (SK1, SK2; SK), which is vertically arranged and connected with the base plate (BP),
b3) a top plate (KP) with a tapered indentation (KS1, KS2; S) for receiving the countersunk head (SK1, SK2; SK) of the at least one bolt (SS1, SS2; SS), and
b4) a weighing cell (WZ) which is arranged between the base and top plates (BP, KP), preferably centrally.

2. A platform weighing machine according to claim 1, wherein the at least one bolt is constructed as a countersunk screw (SS1, SS2; SS), which is preferably connected with the base plate (BP) by means of a tapped hole (B1, B2).

## Revendications

1. Pont à bascule, comportant
a) une plaque (AB) de recouvrement pour placer des objets à peser,
b) des coins (LE) de charge pour soutenir la plaque (AB) de revêtement aux sommets, qui comportent chacun
b1) un plateau (BP) de fond,
b2) au moins un boulon (SS1, SS2; SS) à tête (SK1, SK2; SK) conique qui est relié au plateau (BP) de fond en étant disposé verticalement,
b3) un plateau (KP) de tête, comportant un renfoncement (KS1, KS2; KS) conique servant à recevoir la tête (SK1, SK2; SK) dudit au moins un boulon, et
b4) une cellule (WZ) de pesage qui est montée , de préférence au centre, entre le plateau (BP) de fond et le plateau (KP) de tête.

2. Pont à bascule suivant la revendication 1, dans lequel ledit au moins un boulon est réalisé en vis (SS1, SS2; SS) à tête conique, qui est reliée au plateau (BP) de fond, de préférence au moyen d'un taraudage (B1, B2).
